Europäisches Patentamt

European Patent Office

Office européen des brevets

(11) Publication number: **0 062 942**

**B1**

(12) **EUROPEAN PATENT SPECIFICATION**

(45) Date of publication of patent specification: **12.10.88**

(21) Application number: **82200363.8**

(22) Date of filing: **24.03.82**

(51) Int. Cl.⁴: **F 16 B 7/14**

(54) Coupling device for telescopic parts.

(30) Priority: **13.04.81 NL 8101793**

(43) Date of publication of application:
**20.10.82 Bulletin 82/42**

(45) Publication of the grant of the patent:
**12.10.88 Bulletin 88/41**

(84) Designated Contracting States:
**DE FR GB IT NL SE**

(56) References cited:
**NL-A-6 517 235**
**NL-A-7 413 811**
**US-A-3 343 231**

(73) Proprietor: **N.V. Philips' Gloeilampenfabrieken**
**Groenewoudseweg 1**
**NL-5621 BA Eindhoven (NL)**

(72) Inventor: **Kuppens, Bernardus Johannes**
**c/o INT. OCTROOIBUREAU B.V. Prof. Holstlaan 6**
**NL-5656 AA Eindhoven (NL)**
Inventor: **Plukaard, Jacobus Johannes**
**c/o INT. OCTROOIBUREAU B.V. Prof. Holstlaan 6**
**NL-5656 AA Eindhoven (NL)**
Inventor: **Kort, Johannes Antonius Maria**
**c/o INT. OCTROOIBUREAU B.V. Prof. Holstlaan 6**
**NL-5656 AA Eindhoven (NL)**
Inventor: **Lucas, Jan Hendrik**
**c/o INT. OCTROOIBUREAU B.V. Prof. Holstlaan 6**
**NL-5656 AA Eindhoven (NL)**

(74) Representative: **Bos, Kornelis Sjoerd et al**
**INTERNATIONAAL OCTROOIBUREAU B.V. Prof.**
**Holstlaan 6**
**NL-5656 AA Eindhoven (NL)**

Courier Press, Leamington Spa, England.

## Description

The invention relates to a coupling device for coupling a tubular outer part to an inner part, which can be inserted into the outer part, in an arbitrary position relative to each other, which coupling device comprises a coupling union and release element, which coupling union surrounds and is arranged to be slidable on the inner part, is coupled to the outer part and comprises flexible elements which are inclined relative to the axial direction of the union and are interconnected and pretensioned in such way that a gripping force is exerted on the inner part and that an axial extension of the coupling union results in a reduction of the circumference of the coupling union in a plane perpendicular to the axis of the union and thus in the union exerting an increased gripping force on the inner part, the coupling union being axially compressible by means of the release element, which results in an increase of the circumference of the coupling union and thus in the coupling union releasing inner part.

The parts of this coupling device can easily be adjusted to a specific length by a simple axial sliding movement until the desired length is reached. Lossening and tightening or latching and unlatching of the parts is then not necessary. If an axial force is exerted between the coupled parts in the coupling device in accordance with the invention, the gripping force of the coupling union on the inner part, and thus the holding force between the coupled parts, increases as the axial force increase. If the coupling union is compressed by means of the release element, the inner part can slide freely through the coupling union in the outer part.

The above described coupling device is for example known from US—A—3 343 231. The coupling union thereof exists of a braided sleeve acting as a gripping member on the inner part.

One problem is that if a force between the inner and outer parts is large, e.g. when the coupling device is used in a vacuum cleaner tube, the braided sleeve must have considerable length to exert a sufficient gripping force. Such a long sleeve is difficult to mount between the parts. Another problem is that if a long braided sleeve is used, the distance over which the sleeve must be compressed in order to release the sleeve from the inner part is great.

It is an object of the invention to overcome the above mentioned problem and to provide a coupling device which provides a satisfactory gripping force between the parts when an axial force is applied to one part relative to the other part, and which coupling device is small with respect to the design. .

According to the invention the coupling device as described in the first paragraph is characterized in that said coupling union comprises two diametrically opposed axially extending portions which are interconnected by the flexible elements, which elements are disposed in two rows, the points of connection of the elements to one axially extending portion all being displaced in the same axial direction of the union relative to the accociated points of connection of the elements to the other axially extending portion.

A preferred embodiment of the coupling device in accordance with the invention is characterized in that there is provided a second coupling union similar to the first coupling union, one of the axially extending portions of the first coupling union being disposed in line with and being integrally connected to one of the axially extending portions of the second coupling union a gap being formed between the other two axially extending portions, which portions are disposed in line with one another, and the flexible elements of the first coupling union being oppositely inclined relative to the flexible elements of the second coupling union. A coupling device provided with such coupling unions is characterized in that the two integrally interconnected axially extending portions of the coupling unions are secured to the outer part and the release element is constitued by a release bush which is arranged around the coupling unions, the release bush being provided on its inner side at each end with a stop which is engageable with the outer end of a respective one of said other two axially extending portions of the coupling unions, one of the stops projecting through an opening in the outer part.

The coupling device in accordance with the invention may, be employed in for example, vacuum-cleaner tubes, stands for video and audio equipment or hair-dryers, adjustable feet or supports for furniture, adjustable shower-curtain rods and adjustable shower-heads.

Embodiments of the inventon will now be described in more detail with reference to the drawings.

Figure 1 shows a simple tube coupling according to the prior art.

Figure 2 shows a braided sleeve coupling union used for coupling the tubes in Figure 1.

Figure 3 shows a coupling union according to the invention, which may be used in conjunction with the tube coupling of Figure 1.

Figure 4 shows another tube coupling.

Figure 5 shows the tube coupling of Figure 4 in an exploded view, and

Figures 6 and 7 illustrate the use of the tube coupling.

Figure 8 shows a developed basic form of the coupling union used in the tube coupling of Figure 4 in a developed basic form.

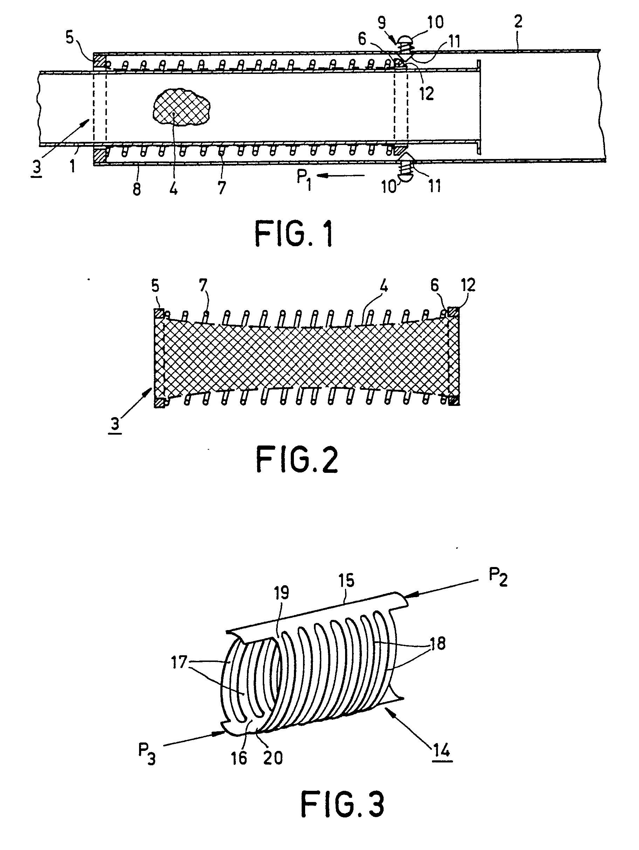

The tube coupling in accordance with the prior art (Fig. 1) comprises an inner part 1 and a tubular outer part 2. The innerpart is slidable in the outer part. The cross-sections of the parts need not always be circular, whilst the inserted inner part may be solid or hollow. For the sake of convenience the inner part and the outer part are represented as a cylindrical inner tube and a cylindrical outer tube respectively. A coupling union 3 is arranged to be slidable on an inner tube 1. The coupling union comprises a braided sleeve 4 (similar to a metal screening sleeve of a cable), a collar 5, 6 being secured to each end of the sleeve (see Fig. 2). Between said collars a compression spring 7 is arranged, which extends the sleeve 4 with a moderate force. The original diameter of the sleeve is thereby reduced to such an extent that the sleeve fits tightly and immovably on the inner tube. The end collar 5 is secured to the end 8 of the outer tube 2. If the two tubes 1 and 2 are subjected to a compressive axial force relative to one another, for example, if the outer tube 2 is subjected to an axial force in the direction $P_1$ relative to the inner tube 1, the sleeve will be slightly extended by the resulting frictional forces between the sleeve and the inner tube and will tend to assume a smaller diameter and thus grip the inner tube more tightly, so that the inner tube cannot be slid into the outer tube.

In order to enable the tubes to be slid into each other there is provided a release element 9, by means of which the collar 6 can be moved in the direction of the collar 5 (arrow P1) against the force of the compression spring 7. As a result of this, the sleeve is subjected to axial compression, so that the gripping force decreases and the inner tube 1 can be slid in the sleeve 4 in both directions. The release element may simply be constituted by a spring-loaded pin 10, which is arranged in an opening 11 in the outer tube and whose depression causes the collar 6 to move towards the flange 5. For this purpose the collar 6 has an inclined contact surface 12. The pin may also be formed with an inclined contact surface. In order to avoid tilting of the collar 6 when the pin is depressed, two release pins 10 are arranged diametrically opposite each other, which pins should be actuated simultaneously.

If an axial tensile force is exerted between the couple tubes of Figure 1, the gripping force of the sleeve 4 on the inner tube 1 will be reduced. The utility of such a tube coupling will, of course, depend upon its application. Stands, adjustable shower-curtain rods and shower-heads are generally subjected only to compressive axial loads.

Figure 3 shows example of a coupling union in accordance with the invention. This coupling union 14 comprises two axially extending portions 15, 16 which are disposed diametrically opposite each other and which are interconnected by inclined flexible elements 17, 18. These elements which are arranged in rows, are inclined in the same direction as one another relative to each of the axially extending portions, that is to say the points of connection 19 of the elements (17, 18) to one axially extending portion 15 are all displaced in the same axial direction of the union relative to the associated points of connection 20 of said elements to the other axially extending portion 16. In Figure 3 the elements 17 and 18 are disposed helically and parallel to each other. Owing to this construction the coupling union is slightly resilient and it is dimensioned so that it grips the inner tube with moderate force. When axial forces are exerted on the axially extending portions 15 and 16 in directions towards one another, as indicated by the arrows P2 and P3 respectively, the diameter of the union will increase, because the elements 17, 18 are in effect pivoted slightly into a less inclined position relative to the longitudinal direction of the union. Conversely if the forces are directed away from one another the diameter of the union will decrease. This coupling union may be used in the coupling device of Fig. 1 in a similar manner to the coupling union 3 of Figure 2, one of the axially extending portions 15 and 16 being secured to the outer tube and the other portion being arranged to be movable axially by means of the release element.

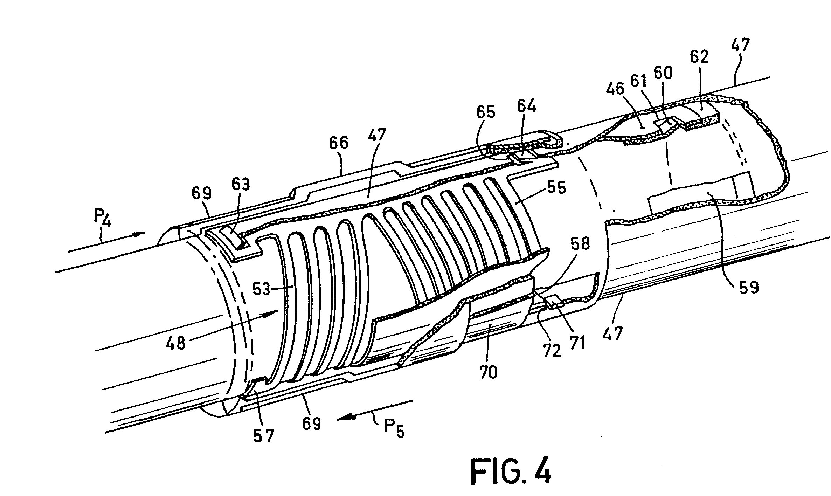

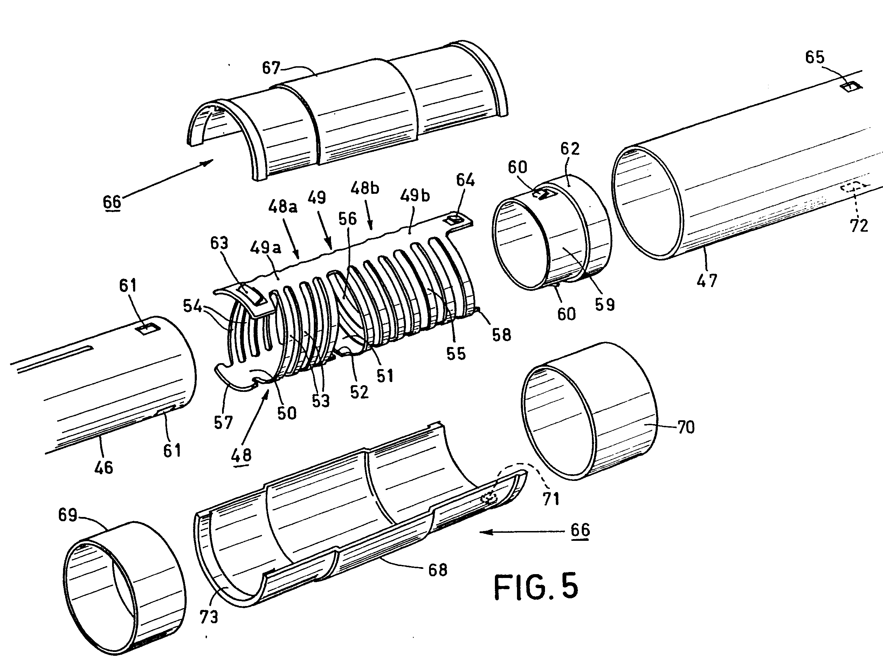

Figure 4 shows a coupling device in which the coupling union 48 (see Fig. 5) comprises two coupling unions 48a, 48b similar to the coupling union 14) in Figure 3. For this purpose an axially extending portion 49a of the one union 48a is situated in line with an axially extending portion 49a of the one union 48a is situated in line with an axially extending portion 49b of the other union 48b, the two portions being combined to form one axially extending portion 49. Diametrically opposite the axially extending portion 49, two further axially extending portions 50 and 51 are disposed. The portions 50 and 51 are spaced from each other by a gap 52, so that these portions are axially movable relative to each other. The portion 49 is connected to the portions 50 and 51 by rows of inclined flexible elements 53, 54 and 55, 56 repectively. The elements 53, 54 are oppositely inclined relative to the elements 55, 56. The end of the inner tube 46 is connected to a bush 59. For this purpose outwardly bent lugs 60 project from the bush into openings 61 in the inner tube. The bush 59 is further provided with a shoulder 62. The outer tube 47 is slidable over the bush 59, the shoulder 62 providing an air-tight seal between the two tubes 46 and 47. This is important when the coupling is used in telescopic vacuum-cleaner tubes. In the assembled condition the outer tube 47 slides over the union 48 up to the stop 63 on the union. The outer tube is coupled to the coupling union by means of an outwardly bent lug 64 on the union 48, which lug projects through an opening 65 in the outer tube.

The release bush 66 is constituted by two semicylindrical shell halves 67, 68 which are arranged around the coupling union and which are retained thereon by two rings 69, 70 slid over the shell halves. At one end the shell half 68 is provided with a projection 71 on the inner side, which projection projects through an opening 72 in the outer tube with clearance, and at the other end the shell half 68 is provided with an inwardly directed rim 73.

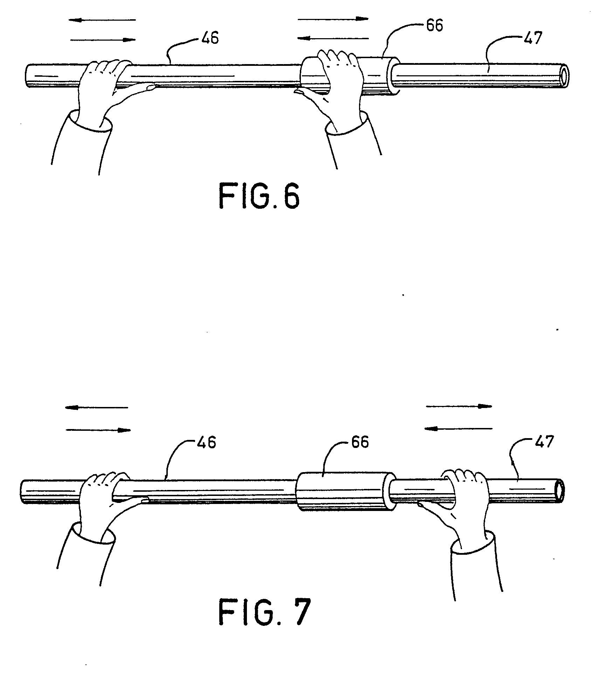

The operation is as follows: If no axial force is exerted on the tubes, the coupling union 48 grips the inner tube 46 with moderate force. If the tubes are to be slid into one another, the release bush 66 is held with one hand and the inner tube 46 is held with the other hand and is pressed in the direction P4 (see also Fig. 6). The end 58 of the axially extending portion 51 of the coupling union 48 abuts the projection 71 of the release bush 66, thereby preventing a displacement of the portion 51 in the direction P4. Owing to the friction between the axially extending portions 49, 50 and the inner tube 46, these axially extending portions are moved a small distance in the direction P4. The portion 50 is moved further in the direction P4 than the portion 49. As a result of this, both the elements 53, 54 and the elements 55, 56 are in effect pivoted slightly into a less inclined position relative to the axial direction of the union. The diameter of the union then slightly increases and the gripping force of the coupling 48 on the inner tube 46 becomes so small that the inner tube can be further slid into the outer tube through the coupling union. Extending the tubes is effected in a similar way. The end 57 of the axially extending portion 50 of the union then presses against the inwardly directed rim 73 of the release bush 66 and the gripping force of the coupling union is again reduced.

If an axial tensile or compressive force is exerted between the tubes, the gripping force of the coupling union will increase as the axial force increases. In the case of a tensile force the axially extending portions 50, 51 slide in the direction P5 relative to the axially extending portion 49. The elements 55, 56 then assume a less inclined portion relative to the axial direction of the union, but the elements 53, 54 occupy a more inclined position. The Elements 53, 54 consequently grip the inner tube, so that the tubes cannot be extended. Conversely, in the case of a compressive force the elements 55, 56 grip the inner tube (see also Fig. 7).

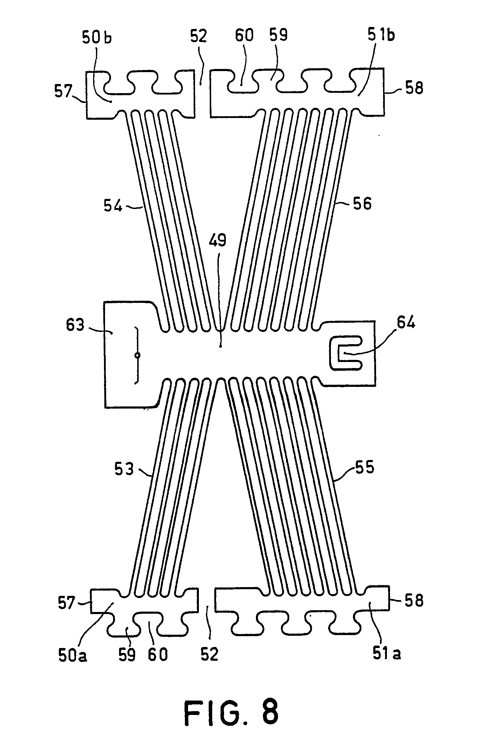

The coupling union can be manufactured by forming the pattern of the coupling union in a flat metal sheet, for example by blanking (see Fig. 8). Subsequently, the sheet can be given a cylindrical shape by means of rolling. The facing axially extending portions 50a, 50b and 51a, 51b respectively are then interconnected by means of interlocking protrusions 59 and recesses 60.

## Claims

1. A coupling device for coupling a tubular outer part (2, 47) to an inner part (1, 46), which can be inserted into the outer part, in an arbitrary position relative to each other, which coupling device comprises a coupling union (14, 48) and a release element (9, 66), which coupling union surrounds and is arranged to be slidable on the inner part, is coupled to the outer part and comprises flexible elements (17, 18, 53, 54, 55, 56) which are inclined relative to the axial direction of the union and are interconnected and pretensioned in such a way that a gripping force is exerted on the inner part and that an axial extension of the coupling union results in a reduction of the coupling union circumference in a plane perpendicular to the axis of the union and thus in the union exerting an increased gripping force on the inner part, the coupling union being axially compressible by means of the release element, which results in an increase of the coupling union circumference and thus in the coupling union releasing the inner part, characterized in that the coupling union (14) comprises two diametrically opposed axially extending portions (15, 16) which are interconnected by the flexible elements (17, 18) which elements are disposed in two rows, the points of connection (19) of the elements to one axially extending portion (15) all being displaced in the same axial direction of the union relative to the associated points of connection (20) of the elements to the other axially extending portion (16).

2. A coupling device as claimed in Claim 1, characterized in that one of the axially extending portions is secured to the outer part (2) and the other axially extending portion is movable axially by means of the release element (9).

3. A coupling device as claimed in Claim 2, characterized in that the release element (9) is constituted by a spring-loaded pin (10) disposed in an opening (11) in the outer part (2), which pin is provided with a contact surface for co-operation with said other axially extending portion.

4. A coupling device as claimed in Claim 1, characterized in that there is provided a second coupling union (48b) similar to the first coupling union (48a), one of the axially extending portions (49a) of the first coupling union being disposed in line with and being integrally connected to one of the axially extending portions (49b) of the second coupling union, a gap (52) being formed between the other two axially extending portions (50, 51) which portions are disposed in line with one another, and the flexible elements (53, 54) of the first coupling union being oppositely inclined relative to the flexible elements (55, 56) of the second coupling union.

5. A coupling device as claimed in Claim 4, characterized in that the two integrally interconnected axially extending portions (49a, 49b) of the coupling unions (48a, 48b) are secured to the outer part and the release element is constituted by a release bush (46) which is arranged around the coupling unions the release bush being provided on its inner side at each end with a stop (71, 73) which is engageable with the outer end (58, 57) of a respective one of said other two axially extending portions (51, 50) of the coupling union, one of the stops (71) projecting through an opening (72) in the outer part (47).

6. A coupling device as claimed in Claim 1 or 5, characterized in that the coupling union is constituted by a basic element which is developed into a plane and which can be bent to form a cylinder, the two opposite sides (50a and 50b, 51a and 51b) of said basic element being interconnectable.

## Patentansprüche

1.Kupplungsvorrichtung zum Kuppeln eines rohrförmigen Aussenteils (2, 47) mit einem in den Aussenteil einschiebbaren Innenteil (1, 46) in einer beliebigen gegenseitigen Lage, wobei diese Kupplungsvorrichtung eine Kupplungseinheit (14, 48) und ein Lösungselement (9, 66) aufweist, wobei diese Kupplungseinheit den Innenteil umgibt une dazu vorgesehen ist, auf diesen Innenteil geschoben zu werden, mit dem Aussenteil gekuppelt ist und biegsame Elemente (17, 18, 53, 54, 55, 56) aufweist, die gegenüber der axialen Richtung der Einheit geneigt und miteinander verbunden sowie derart vorgespannt sind, dass auf den Innenteil eine Greifkraft ausgeübt wird und dass eine axiale Ausdehnung der Kupplungseinheit zu einer Verringerung des Umfangs der Kupplungseinheit führt und zwar in einer Ebene senkrecht zu der Achse der Einheit und folglich in der Einheit eine vergrösserte Greifkraft auf den Innenteil ausgeübt wird, wobei die Kupplungseinheit durch das Lösungselement in axialer Richtung zusammengedruckt werden kann, wodurch in der Kupplungseinheit der Innenteil freigegeben wird, dadurch gekennzeichnet, dass die Kupplungseinheit (14) zwei einander diametral gegenüberliegende sich axial erstreckende Teile (15, 16) aufweist, die durch die biegsamen Elemente (17, 18) miteinander verbunden sind, wobei diese Elente in zwei Reihen vorhesehen sind, wobei die Verbindungspunkte (19) der Elemente mit dem einem sich axial erstreckenden Teil (15) alle in derselben axialen Richtung der Einheit gegenüber den zugeordneten Verbindungspunkten (20) der Elemente mit dem anderen sich axial erstreckenden Teil (16) verschoben sind.

2. Kupplungsvorrichtung nach Anspruch 1, dadurch gekennzeichnet, dass einer der sich in axialer Richtung erstreckenden Teile an dem Aussenteil (2) befestigt ist und der andere sich axial erstreckende Teil mittels des Lösungselementes (9) in axialer Richtung beweglich ist.

3. Kupplungsvorrichtung nach Anspruch 2, dadurch gekennzeichnet, dass das Lösungselement (9) durch einen federbelasteten Stift (10) in einer Öffnung (11) in dem Aussenteil (2) gebildet ist, wobei dieser Stift mit einer Kontaktfläche zum Zusammenarbeiten mit dem genannten anderen sich axial erstreckenden Teil versehen ist.

4. Kupplungsvorrichtung nach Anspruch 1, dadurch gekennzeichnet, dass entsprechend der ersten Kupplungseinheit (48a) eine zweite Kupplungseinheit (48b) vorgesehen ist, wobei einer der sich in axialer Richtung erstreckenden Teile (49a) der ersten Kupplungseinheit fluchtend zu und integral verbunden mit einem der sich in axialer Richtung erstreckenden Teile (49b) der zweiten Kupplungseinheit vorgesehen ist wobei zwischen den zwei weiteren sich in axialer Richtung erstreckenden Teilen (50, 51) ein Spalt (52) vorgesehen ist, wobei diese Teile Fluchtend zueinander vorgesehen sind und wobei die biegsamen Elemente (53, 54) der ersten Kupplungseinheit gegenüber den biegsamen Elementen (55, 56) der zweiten Kupplungseinheit entgegengesetzt geneigt sind.

5. Kupplungsvorrichtung nach Anspruch 4, dadurch gekennzeichnet, dass die zwei integral miteinander verbundenen sich in axialer Richtung erstreckenden Teile (49a, 49b) der Kupplungseinheiten (48a, 48b) an dem Aussenteil befestigt sind und das Lösungselement durch eine Lösungsbüchse (46) gebildet ist, die sich um die Kupplungseinheiten herum befindet, wobei die Lösungsbüchse auf der Innenseite an jedem Ende mit einem Anschlag (71, 73) versehen ist, der mit dem Ende (58, 57) des betreffenden der genannten zwei weiteren sich in axialer Richtung erstreckenden Teile (51, 50) der Kupplungseinheit zusammenarbeiten kann, wobei einer der Anschläge (71) durch eine Öffnung (72) in dem Aussenteil (47) hindurchragt.

6. Kupplungsvorrichtung nach Anspruch 1 oder 5, dadurch gekennzeichnet, dass die Kupplungseinheit durch ein Basiselement gebildet ist, das in eine Ebene abgewickelt ist und das zum Bilden eines Zylinders gekrümmt werden kann, wobei die zwei einander gegenüberliegenden Seiten (50a und 50b, 51a und 51b) des genannten Basiselementes miteinander verbunden werden können.

**Revendications**

1. Dispositif d'accouplement pour accoupler une partie extérieure tubulaire (2, 47) à une partie intérieure (1, 46), pouvant être introduite dans la partie extérieure, dans une position quelconque l'un par rapport à l'autre, dispositif d'accouplement comportant un manchon d'accouplement (14, 48) et un élément de désaccouplement (9, 66), manchon d'accouplement qui entoure la partie intérieure tout en étant conçu de façon à pouvoir glisser sur celle-ci, est couplé à la partie extérieure et comporte des éléments flexibles (17, 18, 53, 54, 55, 56) qui sont inclinés par rapport au sens axial du manchon d'accouplement et qui sont liés entre eux et précontraints de façon qu'une force de serrage soit exercée sur la partie intérieure et qu'un allongement axial du manchon d'accouplement provoque une diminution de la périphérie du manchon d'accouplement dans un sens perpendiculaire à l'axe du manchon, de sortie que le manchon exerce une force de serrage accrue sur la partie intérieure, alors que le manchon d'accouplement peut être comprimé axialement par l'élément de désaccouplement, ce qui provoque une augmentation de la périphérie du manchon d'accouplement et, par conséquent, le dégagement du manchon d'accouplement de la partie intérieure, caractérisé en ce que le manchon d'accouplement (14) comporte deux parties diamétralement opposées (15, 16) s'étendant dans le sens axial et liées par les élémens flexibles (17, 18), éléments qui sont disposées dans deux rangées, les jonctions (19) entre les éléments et l'une des parties axiales étant déplacées dans le même sens axial du manchon par rapport aux jonctions correspondantes (20) entre les éléments et l'autre partie axiale (16).

2. Dispositif d'accouplement selon la revendication 1, caractérisé en ce que l'une des parties axiales est fixée à la partie extérieure (2) et en ce que l'autre partie axiale peut être déplacée dans le sens axial au moyen de l'élément de désaccouplement (9).

3. Dispositif d'accouplement selon la revendication 2, caractérisé en ce que l'élément de désaccouplement (9) est constitué par une tige à ressort (10) qui est disposée dans une ouverture (11) pratiquée dans la partie extérieure (2) et qui présente une surface de contact servant à coopérer avec ladite autre partie axiale.

4. Dispositif d'accouplement selon la revendication 1, caractérisé en ce qu'il est prévu un second manchon d'accouplement (48b), analogue au premier (48a), l'une des parties axiales (49a) du premier manchon d'accouplement étant alignée par rapport à l'une des parties axiales (49b) du second manchon d'accouplement tout en étant solidaire de celle-ci et un espace (52) étant formé entre les deux autres parties axiales (50, 51) parties qui sont alignées l'une par rapport à l'autre, alors que les élément flexibles (53, 54) du premier manchon d'accouplement sont inclinés dans le sens opposé par rapport aux éléments flexibles (55, 56) du second manchon d'accouplement.

5. Dispositif d'accouplement selon la revendication 4, caractérisée en ce que les deux parties axiales solidarisées (49a, 49b) des manchons d'accouplement (48a, 48b) sont fixées à la partie extérieure et en ce que l'élément de désaccouplement est constitué par une bague de désaccouplement (46) entourant les manchons d'accouplement et qui, sur sa face intérieure, est munie à chaque extrémité d'une butée (71, 73) pouvant coopérer avec l'extrémité extérieure (58, 57) de l'une desdites deux autres parties axiales (51, 50) des manchons d'accouplement, l'une des butées (71) traversant une ouverture (72) pratiquée dans la partie extérieure (47).

6. Dispositif d'accouplement selon la revendication 1 ou 5, caractérisé en ce que le manchon d'accouplement est constitué par un élément de base développé dans un plan et pouvant être cintré sous forme cylindrique, les deux faces opposées (50a et 50b d'une part et 51a et 51b d'autre part) dudit élément de base pouvant être liées entre elles.

0 062 942

FIG. 1

FIG.2

FIG.3

1

FIG. 4

FIG.5

0 062 942

FIG. 6

FIG. 7

FIG. 8